# FASCICULE DE BREVET EUROPEEN

(11) **EP 2 553 746 B1**
(45) Date de publication et mention de la délivrance du brevet: **02.04.2014**
(21) Numéro de dépôt: 11719591.7
(22) Date de dépôt: 22.03.2011
(51) Int. Cl.: H01M 2/16, H01M 10/052, B01D 67/00, B01D 71/34

(54) **PROCÉDÉ DE FORMATION D'UN FILM EN POLYMÈRE FLUORÉ DE TYPE POLYFLUORURE DE VINYLIDÈNE UTILISABLE COMME SÉPARATEUR POUR ACCUMULATEUR AU LITHIUM**
VERFAHREN ZUR HERSTELLUNG EINER FOLIE AUS FLUORPOLYMER VOM TYP POLYVINYLIDENFLUORID ALS SEPARATOR FÜR EINE LITHIUMBATTERIE
METHOD OF FORMING A FILM MADE OF A FLUOROPOLYMER OF THE POLYVINYLIDENE FLUORIDE TYPE THAT CAN BE USED AS A SEPARATOR FOR A LITHIUM BATTERY

(30) Priorité: 01.04.2010 FR 1001366
(43) Date de publication de la demande: 06.02.2013
(73) Titulaire: Commissariat à l'Énergie Atomique et aux Énergies Alternatives, 75015 Paris (FR); Centre National de la Recherche Scientifique, 75794 Paris Cedex 16 (FR)
(72) Inventeur: PATOUX, Sébastien, 38500 Saint Nicolas de Macherin (FR); ALLOIN, Fannie, F-38220 Vizille (FR); DANIEL, Lise, F-38160 Saint Marcellin (FR)
(74) Mandataire: Talbot, Alexandre
(86) Numéro de dépôt international: PCT/FR2011/000161
(87) Numéro de publication internationale: WO 2011/121190

(56) Documents cités:
- FR-A1- 2 857 670
- GB-A- 2 199 786
- US-A- 4 761 232
- US-A- 5 834 107
- H. MATSUYAMA AND AL: "Membrane formation via phase separation induced by penetration of nonsolvent form vapor phase. II. Membrane morphology", JOURNAL OF APPLIED POLYMER SCIENCE, vol. 74, 23 juillet 1999 (1999-07-23), pages 171-178, XP002609203,
- CHAE PARK H ET AL: "Membrane formation by water vapor induced phase inversion", JOURNAL OF MEMBRANE SCIENCE, ELSEVIER SCIENTIFIC PUBL.COMPANY. AMSTERDAM, NL, vol. 156, no. 2, 30 avril 1999 (1999-04-30), pages 169-178, XP004222926, ISSN: 0376-7388, DOI: DOI:10.1016/S0376-7388(98)00359-7
- LEE Y M ET AL: "Novel porous separator based on PVdF and PE non-woven matrix for rechargeable lithium batteries", JOURNAL OF POWER SOURCES, ELSEVIER SA, CH, vol. 139, no. 1-2, 4 janvier 2005 (2005-01-04), pages 235-241, XP004694572, ISSN: 0378-7753, DOI: DOI:10.1016/J.JPOWSOUR.2004.06.055
- LI C L ET AL: "Insight into the preparation of poly(vinylidene fluoride) membranes by vapor-induced phase separation", JOURNAL OF MEMBRANE SCIENCE, ELSEVIER SCIENTIFIC PUBL.COMPANY. AMSTERDAM, NL, vol. 361, no. 1-2, 30 septembre 2010 (2010-09-30), pages 154-166, XP027152029, ISSN: 0376-7388 [extrait le 2010-06-04]

## Description

### Domaine technique de l'invention

L'invention concerne un procédé de formation d'un film en polymère fluoré de type polyfluorure de vinylidène, comprenant les étapes suivantes :
- dépôt sur un support d'une solution contenant un solvant dans lequel est dissous le polymère fluoré et
- précipitation du polymère fluoré par inversion de phase avec de l'eau.

### État de la technique

Face à la demande croissante des besoins de stockage de l'énergie, les accumulateurs au lithium, tels que les accumulateurs Li-Ion, sont devenus incontournables. Cette technologie peut, en effet, s'adapter à différentes applications, en fonction notamment d'un large choix de matériaux actifs d'électrodes positive et négative et d'électrolyte.

Dans le cas d'électrolyte liquide (sel et solvants), le choix de l'élément séparateur, destiné à séparer les électrodes positive et négative et à être imbibé d'électrolyte liquide est aussi déterminant. À titre d'exemple, l'article « A review on the separators of liquid electrolyte Li-Ion batteries » de Sheng Shui Zhang (Journal of Power Sources 164 (2007) 351-364) passe en revue les différentes catégories de séparateurs utilisées dans des batteries Li-Ion avec un électrolyte liquide, ainsi que les qualités requises.

Parmi ces différentes catégories, la plus répandue est celle formée par les membranes polymères poreuses destinées à recevoir un électrolyte liquide, avantageusement non aqueux.

Ces membranes sont, de manière courante, formées de matériaux à base de la famille des polyoléfines, incluant le polypropylène (PP), le polyéthylène (PE) ou un mélange des deux (PE-PP). Les éléments séparateurs les plus utilisés sont ceux commercialisés par la société Celgard, tels que la gamme de séparateurs monocouches PP Celgard®, la gamme de séparateurs monocouches PE Celgard® et la gamme de séparateurs tricouches PP/PE/PP Celgard®. De tels éléments séparateurs ont, en particulier, été privilégiés, car leur faible épaisseur permet de limiter la distance entre les électrodes positive et négative et donc de compenser la relative mauvaise conductivité des ions Li⁺ du ou des solvants organiques utilisés pour l'électrolyte liquide, en comparaison à des électrolytes aqueux. De plus, ces éléments séparateurs présentent une tortuosité et une porosité suffisantes pour éviter la mise en court-circuit des électrodes, via la formation de dendrites à l'électrode négative, lorsque celle-ci est en carbone graphite.

De manière alternative, il a aussi été proposé d'utiliser un polymère fluoré de type polyfluorure de vinylidène (PVdF), pour réaliser des membranes polymères poreuses, formant les séparateurs des accumulateurs au lithium.

Le brevet US5296318 met, par exemple, en avant l'intérêt de films séparateurs formés par des polymères obtenus par copolymérisation du fluorure de vinylidène (VdF) avec environ 8% à 25% de hexafluorure de propylène (HFP).

La demande de brevet WO-A-2005/119816 propose aussi un séparateur pour accumulateur au lithium de type polyfluorure de vinylidène et plus particulièrement d'un copolymère PVdF/HFP. En particulier, il a été trouvé qu'un accumulateur au lithium avec une membrane en PVdF/HFP d'une épaisseur comprise entre 60 et 120µm et d'une porosité comprise entre 50% et 90% comme élément séparateur permettaient d'obtenir un bon fonctionnement en puissance, c'est-à-dire avec une charge et une décharge rapides. En effet, le PVdF présente une bonne affinité avec les électrolytes liquides couramment employés dans les accumulateurs au lithium, et notamment avec les solvants de type carbonate d'alkyle utilisés pour dissoudre des sels de lithium. Cette bonne affinité permet une chute de conductivité moindre lors de l'introduction de la membrane à base de PVdF dans l'accumulateur, en comparaison celle observée avec des séparateurs à matrice de type polyoléfine. De plus, la structure d'une telle membrane, sous forme d'un gel, assure une meilleure cohésion entre les électrodes par rapport à un séparateur de type polyoléfine, elle est aussi susceptible de limiter les risques de fuites d'électrolyte et elle permet de réaliser des accumulateurs à architecture souple.

Dans la demande de brevet WO-A-2005/119816, la membrane en PVdF /HFP peut être réalisée par une technique d'inversion de phase par immersion. Cette technique comprend la solubilisation du polymère dans un solvant, tel que la N-méthylpyrolidone (NMP), suivie du dépôt de la solution sur un support rigide et de l'immersion du support dans un non-solvant, c'est-à-dire une solution miscible avec le solvant mais dans laquelle le polymère ne se dissous pas, tel que l'éthanol. Une telle immersion provoque la précipitation du polymère par inversion de phase, puis le support est placé dans une étuve pour séchage. Un tel procédé de fabrication permet d'obtenir des membranes avec des caractéristiques adaptées à l'application accumulateur au lithium, mais elle nécessite un volume très important de solvants organiques. En effet, afin d'obtenir une précipitation rapide du polymère, le non-solvant doit être en large excès par rapport à la solution de polymère. Ce procédé implique donc un grand volume d'un mélange de solvants, qu'il faut par la suite traiter, ce qui engendre un coût de procédé important ainsi que des problèmes de recyclage.

Dans l'article « Fine structure of Poly(vinylidene fluoride) membranes prepared by phase inversion from a water/N-Methyl-2-pyrollidone/Poly(vinylidene fluoride) system » de D-J. Lin et al. (J. Power Sci., Part B, Polym. Phys., 42 (2004) 830-842), il a été proposé de réaliser des membranes en PVdF par inversion de phase par immersion, à partir d'une solution de N-méthyl-2-pyrollidone (NMP) dans laquelle est dissous le PVdF et dans un non-solvant constitué par de l'eau pure ou par un mélange d'eau et de NMP. Cependant, l'emploi d'eau comme non-solvant ne permet pas d'obtenir une membrane utilisable comme séparateur pour accumulateur au lithium. En effet, le polymère précipite trop rapidement. La membrane obtenue présente alors une peau et des pores dont la taille moyenne est trop élevée pour que la membrane puisse être utilisée comme séparateur pour accumulateur au lithium.

Dans l'article <<Membrane formation via phase separation induced by penetration of nonsolvent from vapor phase II. Membrane morphology, de Matsuyama et al (J. Applied Polym. Science, vol 74, 171-178), il est décrit la formation d'une membrane en polymère fluoré par inversion de phase avec l'eau dans une atmosphère chargée de vapeur d'eau.

### Objet de l'invention

L'invention a pour but de proposer un procédé de formation d'un film en polymère fluoré de type polyfluorure de vinylidène peu coûteux, non polluant et permettant, plus particulièrement, d'obtenir un film utilisable comme élément séparateur d'un accumulateur au lithium.

Selon l'invention, ce but est atteint par les revendications annexées. Ce but est, plus particulièrement, atteint par le fait que le film en polymère fluoré de type polyfluorure de vinylidène est formé par :
- dépôt sur un support d'une solution contenant un solvant dans lequel est dissous le polymère fluoré et
- précipitation du polymère fluoré par inversion de phase avec de l'eau, ladite précipitation du polymère étant obtenue par mise en présence de ladite solution avec une atmosphère chargée de vapeur d'eau,
sans immersion dans un non-solvant liquide et notamment dans de l'eau liquide.

Dans un mode préféré de réalisation, l'étape de précipitation du polymère fluoré est réalisée à une température comprise entre 30°C et 70°C, avec un solvant choisi parmi l'acétone et/ou la butanone, une proportion massique en polymère fluoré dans la solution, avantageusement, comprise entre 11% et 20% et encore plus avantageusement entre 13% et 17% et une humidité relative pendant la précipitation du polymère fluoré, avantageusement, comprise entre 60% et 98% et encore plus avantageusement entre 85 et 98%.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 à 3 représentent des clichés de microscopie électronique à balayage d'un film en PVdF formé par un procédé selon l'invention, respectivement en vue de face, en vue arrière et en coupe.
- la figure 4 est un graphique représentant l'évolution du pourcentage de capacité restituée en décharge en fonction du régime, pour des accumulateurs au lithium comprenant différents éléments séparateurs.

### Description de modes particuliers de réalisation

Il a été trouvé, de manière surprenante et inattendue, qu'un film (pouvant également être appelé « membrane ») en polymère fluoré de type polyfluorure de vinylidène peut présenter des propriétés adaptées à une utilisation comme séparateur d'accumulateur au lithium, en utilisant une technique d'inversion de phase avec de l'eau comme procédé de formation. Dans le cadre de l'invention, la précipitation du polymère fluoré initialement dissous dans une solution contenant un solvant est obtenue en mettant ladite solution en présence d'une atmosphère chargée en vapeur d'eau, à l'exclusion de toute immersion dans un non-solvant liquide tel que l'eau. Ainsi, l'eau est sous forme gazeuse lorsqu'elle est, au moins initialement, mise en présence avec ladite solution. Ainsi, contrairement à l'art antérieur, il n'y a donc pas, dans le cadre de l'invention, d'inversion de phase par immersion dans un solvant non liquide, que ce soit avant ou après la mise en présence de la solution avec une atmosphère chargée en vapeur d'eau.

Ainsi, dans un premier temps, le polymère fluoré choisi pour former, sous la forme d'un film autosupporté poreux, un séparateur pour accumulateur au lithium, est dissous dans un solvant. Le solvant est plus particulièrement choisi parmi l'acétone, la butanone, le tétrahydrofurane, la cyclopentanone, la γ-butyrolactone, le dimethysulfoxide et la N-méthylpyrrolidone et un mélange de ceux-ci. Le solvant est, de préférence, choisi parmi l'acétone, la butanone et un mélange d'acétone et de butanone. Le choix de ces solvants est en effet préféré, car ces solvants sont volatils, ce qui facilite leur élimination après l'opération de précipitation et ils favorisent la formation d'un film présentant des petites tailles de pores (avantageusement entre 0,5 et 4 microns). Ceci est particulièrement intéressant dans le domaine d'application des accumulateurs au lithium.

La proportion massique du polymère fluoré dans la solution est, avantageusement, comprise entre 11% et 20% et préférentiellement entre 13% et 17% et très préférentiellement entre 13% et 15%. De plus, le plus souvent, plus la proportion massique en polymère fluoré est faible dans la solution, plus le taux de porosité dans le film est élevé.

Par ailleurs, le polymère fluoré peut être un homopolymère de PVdF ou bien un de ses dérivés, par exemple un copolymère obtenu par copolymérisation du fluorure de vinylidène avec un ou plusieurs autres monomères, tels que les copolymères PVdF/HFP, PVdF/CTFE, PVdF/TrFE, PVdF/TFE, PVdF/ PTFE, PVdF/PCTFE, PVdF/ECTFE...

Après dissolution complète du polymère fluoré dans le solvant, la solution est déposée sur un support, par tout type de techniques de dépôt. Le support peut être quelconque. Il peut s'agir, par exemple, d'un substrat métallique tel qu'un film en aluminium ou bien d'un film polymère inerte, d'une plaque de verre ou même d'une des électrodes de l'accumulateur au lithium.

Le support muni du dépôt est, ensuite, mis en présence d'une atmosphère chargée de vapeur d'eau, afin d'obtenir la précipitation du polymère fluoré par inversion de phase. La précipitation du polymère fluoré par invention de phase est obtenue dans le cadre de l'invention par la seule opération de mise en présence du support muni du dépôt dans une atmosphère chargée de vapeur d'eau, à l'exclusion de toute étape d'immersion dans un bain de non-solvant liquide (l'eau par exemple). Par atmosphère chargée en vapeur d'eau, on entend que le milieu gazeux environnant le dépôt est chargé en vapeur d'eau, c'est-à-dire qu'il présente un taux d'humidité relatif non nul, avantageusement compris entre environ 60% et environ 98% et encore plus avantageusement entre 85% et 98%. De plus, la température à laquelle est réalisée ladite étape de précipitation et plus particulièrement la température du milieu gazeux environnant sont, avantageusement, comprises entre 30°C et 70°C.

À titre d'exemple, cette étape de précipitation du polymère fluoré peut être réalisée en plaçant le support muni du dépôt dans une enceinte thermostatée à une température prédéterminée et dans laquelle l'atmosphère est chargée en vapeur d'eau, afin de précipiter, de manière contrôlée, le polymère fluoré sur le support. Une telle enceinte peut être, plus particulièrement, une étuve à humidité contrôlée.

La température à laquelle est thermostatée l'enceinte pendant l'opération de précipitation est, avantageusement, comprise entre 30°C et 70°C et elle est avantageusement de l'ordre de 40°C.

Le taux d'humidité relative pendant l'opération de précipitation, et notamment dans l'enceinte thermostatée, est, de plus, avantageusement compris entre 60% et 98% et de façon encore plus avantageuse entre 85% et 98%. Plus particulièrement, le taux d'humidité relative est contrôlé pendant l'opération de précipitation et plus particulièrement régulé autour d'une valeur de consigne, par introduction continue, à partir d'un réservoir d'eau, de vapeur d'eau dans ladite enceinte.

La durée de cette étape est, avantageusement, inférieure ou égale à 1 heure. Elle est, par exemple comprise entre 1 minute et 60 minutes et de préférence entre 10 minutes et 60 minutes.

Ainsi, le fait de mettre la solution contenant le polymère fluoré dissous dans un solvant en contact avec une atmosphère chargée de vapeur d'eau, avec la possibilité de pouvoir contrôler le taux d'humidité relative permet, de manière avantageuse, d'obtenir une précipitation complète et contrôlée du polymère par inversion de phase, sans immersion dans un non-solvant liquide, et donc d'obtenir un taux de porosité contrôlé dans le film obtenu. La précipitation du polymère est, en effet, contrôlée par l'incorporation progressive et contrôlée d'eau dans la solution contenant le solvant et le polymère fluoré. De plus, cette incorporation progressive de l'eau dans ladite solution est elle-même contrôlée par la pression partielle de vapeur d'eau contenue dans l'atmosphère en équilibre avec la solution contenant le polymère fluoré et le solvant. Ainsi, il est possible de limiter la quantité d'eau introduite dans la solution par rapport à une immersion dans une grande quantité d'eau liquide, ce qui permet d'obtenir une précipitation du polymère plus lente et donc empêcher la formation de peau (zone non poreuse à la surface de la membrane).

Ensuite, le film en polymère fluoré peut subir une étape d'élimination de toute trace résiduelle de solvant et d'eau dans ledit film. Elle est, avantageusement, réalisée par séchage sous vide. L'étape de séchage sous vide est avantageusement réalisée à une température comprise entre environ 40°C et environ 80°C et préférentiellement de l'ordre de 60°C. Une telle étape d'élimination ne peut pas, dans le cadre de l'invention, être réalisée par immersion dans un bain liquide tel que de l'eau, car ceci pourrait être nocif pour l'usage ultérieur du film comme séparateur pour accumulateur au lithium.

Ainsi, la réalisation du film exclut une étape d'immersion dans un non-solvant liquide et plus particulièrement dans de l'eau liquide, que ce soit avant ou après la mise en présence de la solution contenant le solvant dans lequel est dissous le polymère fluoré avec l'atmosphère chargée de vapeur d'eau.

Un tel procédé de réalisation du film est, par ailleurs, peu coûteux, facile à mettre en oeuvre et non polluant. Il permet surtout d'obtenir un film homogène présentant des propriétés adaptées à une utilisation comme séparateur pour accumulateur au lithium.

En effet, le film obtenu grâce à un tel procédé de réalisation est symétrique, contrairement à un film obtenu par inversion de phase par immersion avec de l'eau utilisée comme non-solvant liquide, tel que décrit notamment dans l'article « Fine structure of Poly(vinylidene fluoride) membranes prepared by phase inversion from a water/N-Methyl-2-pyrollidone/Poly(vinylidene fluoride) system » de D-J. Lin.

On entend par film (ou membrane) symétrique, un film ayant une densité de pores et une taille de pores, sensiblement constantes sur toute l'épaisseur du film. En particulier, les surfaces opposées du film présentent des densités de pores et des tailles de pores équivalentes ou sensiblement égales. En effet, la dissymétrie d'un film engendre le plus souvent la présence d'une peau (surface non poreuse) ou bien de macropores. Or, ces deux phénomènes sont néfastes au bon fonctionnement d'un accumulateur au lithium, dans la mesure où le premier engendre une résistance interne élevée et le second permet des courts-circuits.

Le film est, par ailleurs, autosupporté et macroporeux. La taille moyenne des pores dudit film est, de préférence, comprise entre environ 0,5µm et environ 10µm et encore plus préférentiellement comprise entre 0,5µm et 4µm.

Enfin, l'épaisseur dudit film est, avantageusement comprise entre 10µm et 100µm et préférentiellement entre 20µm et 50µm. Cette épaisseur de film est, de plus, ajustable si le dépôt de la solution sur le support est réalisé par l'intermédiaire d'un applicateur de film à hauteur de fente réglable.

Le taux de porosité du film est, plus particulièrement, compris entre 35% et 95% et avantageusement entre 60% et 80%. Il est, de plus, avantageusement, sensiblement constant dans toute l'épaisseur du film. Le taux de porosité également nommé porosité (εₚ) est, en particulier, défini comme le rapport entre la différence entre la densité théorique du polymère fluoré (notée ρ_{théorique} et d'environ 1,8 g.cm⁻³ pour le PVdF) et la densité apparente du film (ρₐₚₚₐᵣₑₙₜₑ) et la densité théorique du polymère fluoré : εₚ = (ρ_{théorique} - ρₐₚₚₐᵣₑₙₜₑ) / ρ_{théorique}. De plus, la densité apparente du film est simplement définie par le rapport de la masse du film et son volume (surface x épaisseur).

Selon un premier exemple (noté ci-après exemple n°1), un film en un homopolymère de PVdF commercialisé par la société Arkema sous le nom de Kynar®741 a été réalisé en mettant ledit homopolymère en solution dans de l'acétone. La proportion massique en polymère dans la solution est de 15%. Par ailleurs, la mise en solution est, avantageusement, réalisée à une température 60°C, afin de faciliter la dissolution du polymère dans le solvant. La solution obtenue est, ensuite, versée sur une feuille d'aluminium, puis placée dans une étuve thermostatée, en maintenant la température à 40°C et l'humidité relative maintenue à un taux de 85%, pendant 60 minutes. Le film obtenu est, ensuite, séché pendant 12 heures sous vide à une température de 60°C, afin d'éliminer tout trace de solvant ou d'eau.

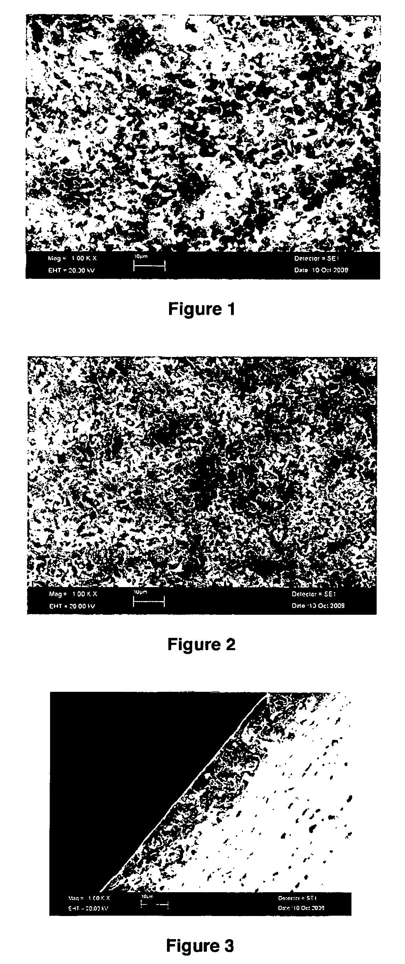

Les figures 1 à 3 représentent les clichés obtenus par microscopie électronique à balayage du film obtenu selon l'exemple n°1, respectivement en vue de face avant, de face arrière et en coupe. Un tel film présente une épaisseur de 75µm, la taille des pores est comprise entre 2µm et 4µm et le taux de porosité est de 80%.

Trois autres films en homopolymère du PVdF (Kynar®741) ont été réalisés dans des conditions similaires au premier exemple comme reporté dans le tableau ci-dessous (Exemples n° 2 à 4), mais en faisant varier le taux d'humidité relative dans l'enceinte thermostatée et/ou le solvant utilisé pour dissoudre le PVdF.

Selon un deuxième exemple (noté ci-après exemple n°5), un film en un homopolymère de PVdF commercialisé par la société Arkema sous le nom de Kynar®741 a été réalisé en mettant ledit homopolymère en solution dans de la butanone. La proportion massique en polymère dans la solution est de 15%. Par ailleurs, la mise en solution est, avantageusement, réalisée à une température 70°C, afin de faciliter la dissolution du polymère dans le solvant. La solution obtenue est, ensuite, versée sur une feuille d'aluminium, puis placée dans une étuve thermostatée, en maintenant la température à 40°C et l'humidité relative maintenue à un taux de 85%, pendant 40 minutes. Le film obtenu est, ensuite, séché pendant 12 heures sous vide à une température de 60°C, afin d'éliminer tout trace de solvant. Un tel film présente une épaisseur de 60µm et, comme reporté dans le tableau ci-dessous, la taille des pores est comprise entre 2µm et 3µm et le taux de porosité est de 60%.

Deux autres films en homopolymère du PVdF (Kynar®741) ont été réalisés dans des conditions similaires au second exemple comme reporté dans le tableau ci-dessous (Exemples n° 6 et 7), mais en faisant varier le taux d'humidité relative dans l'enceinte thermostatée.

Selon un troisième exemple (noté ci-après exemple n°8), un film en un homopolymère de PVdF commercialisé par la société Arkema sous le nom de Kynar®741 a été réalisé en mettant ledit homopolymère en solution dans de la Cyclopentanone. La proportion massique en polymère dans la solution est de 15%. Par ailleurs, la mise en solution est, avantageusement, réalisée à une température 70°C, afin de faciliter la dissolution du polymère dans le solvant. La solution obtenue est; ensuite, versée sur une feuille d'aluminium, puis placée dans une étuve thermostatée, en maintenant la température à 40°C et l'humidité relative maintenue à un taux de 95%, pendant 40 minutes. Le film obtenu est, ensuite, séché pendant 12 heures sous vide à une température de 60°C, afin d'éliminer tout trace de solvant. Un tel film présente une épaisseur de 65µm et comme reporté dans le tableau ci-dessous, la taille des pores est comprise entre 0,7 et 1µm et le taux de porosité est de 65%.

**Tableau**

| **Exemples** | **Proportion massique en polymère dans la solution (en %)** | **Solvant utilisé pour dissoudre le polymère** | **Humidité relative (en %)** | **Taux de Porosité (%)** | **Taille des pores (µm)** |
|---|---|---|---|---|---|
| 1 | 15 | Acétone | 85 | 80 | 2-4 µm |
| 2 | 15 | Acétone | 98 | 87 | 0.8-1 µm |
| 3 | 15 | Acétone | 95 | 76 | 3-4 µm |
| 4 | 13 | Acétone | 95 | 88 | 1-2.5 µm |
| 5 | 15 | Butanone | 85 | 60 | 2-3 µm |
| 6 | 15 | Butanone | 95 | 75 | 1.5-2 µm |
| 7 | 13 | Butanone | 95 | 84 | 1-2 µm |
| 8 | 15 | Cyclopentanone | 95 | 65 | 0.7-1 µm |

De plus, les films réalisés selon les exemples 1 à 8 ont tous la propriété d'être des films symétriques.

Ils peuvent être utilisés en tant que séparateur pour un accumulateur au lithium, disposé entre des électrodes négative et positive et imbibé d'un électrolyte liquide avantageusement non aqueux. Les matériaux susceptibles de former les électrodes positive et négative et l'électrolyte de l'accumulateur au lithium peuvent être de tout type connu.

À titre d'exemple, des accumulateurs au lithium de format « pile bouton » ont été réalisés avec chacun des films réalisés selon les exemples 1 à 4 et avec deux séparateurs commerciaux vendus sous le nom de C480® (tricouche PP/PE/PP d'une épaisseur de 21,5µm) et C2400® (monocouche PP d'une épaisseur de 25µm) commercialisés par Celgard.

Chaque accumulateur au lithium comprend :
- une électrode négative constituée par un disque de 16mm de diamètre prélevé sur un film composite de 25µm d'épaisseur (environ 1,5mAh.cm⁻²) formé par un mélange de Li₄Ti₅O₁₂ (82% en masse), de carbone (12% en masse) et de PVdF (6% en masse) en guise de liant, le disque étant déposé sur un collecteur de courant formé par un feuillard en aluminium de 20µm d'épaisseur,
- une électrode positive constituée par un disque de 14mm de diamètre, prélevé sur un film composite de 25µm d'épaisseur formé par un mélange de LiFePO₄ (82% en masse), de carbone (12% en masse) et de PVdF (6% en masse) en guise de liant, le disque étant déposé sur un collecteur de courant formé par un feuillard en aluminium de 20µm d'épaisseur,
- un séparateur selon les exemples 1 à 4, C480 ou C2400, imbibé d'un électrolyte liquide à base du sel LiPF₆ (1mol.L⁻¹) en solution dans un mélange de carbonate d'éthylène et de carbonate de diméthyle.

Ces différents accumulateurs ont été testés entre 0,05V et 2,8V à température ambiante en mode galvanostatique avec le protocole suivant :
- un cycle de charge et de décharge à un régime C/5
- une charge à un régime C/5 suivie d'une décharge à un régime 360C
- une charge à un régime C/5 suivie d'une décharge à un régime 120C
- une charge à un régime C/5 suivie d'une décharge à un régime 60C
- une charge à un régime C/5 suivie d'une décharge à un régime 12C
- une charge à un régime C/5 suivie d'une décharge à un régime 6C
- une charge à un régime C/5 suivie d'une décharge à un régime 2C
- une charge à un régime C/5 suivie d'une décharge à un régime C et
- une charge à un régime C/5 suivie d'une décharge à un régime C/5.

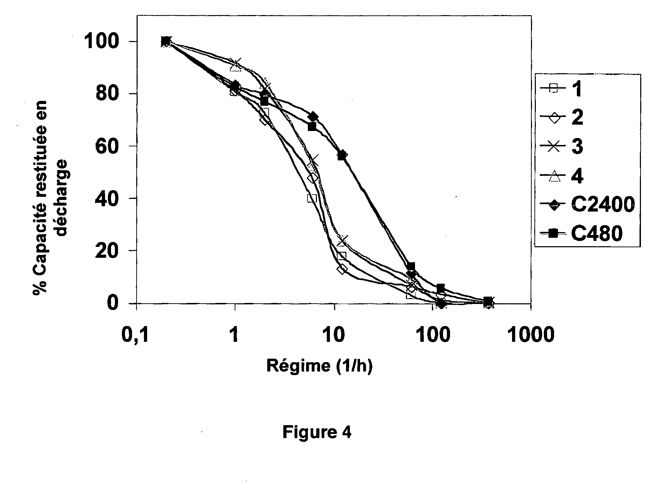

La figure 4 illustre alors le pourcentage de charge restituée en décharge en fonction du régime pour les différents accumulateurs testés avec les membranes des exemples 1 à 4 obtenues selon le procédé de l'invention et avec les membranes commerciales C2400® et C480® commercialisées par Celgard.

## Revendications

1. Procédé de formation d'un film en polymère fluoré de type polyfluorure de vinylidène, comprenant les étapes suivantes :
- dépôt sur un support d'une solution contenant un solvant dans lequel est dissous le polymère fluoré et
- précipitation du polymère fluoré par inversion de phase avec de l'eau, **caractérisé en ce que** la précipitation du polymère est obtenue par mise en présence de ladite solution avec une atmosphère chargée de vapeur d'eau et **en ce que** le procédé ne comporte pas d'étape d'immersion dans un non-solvant liquide.

2. Procédé selon la revendication 1, **caractérisé en ce que** l'étape de précipitation du polymère fluoré est réalisée à une température comprise entre 30°C et 70°C.

3. Procédé selon l'une des revendications 1 et 2, **caractérisé en ce que** le solvant est choisi parmi l'acétone, la butanone, la N-méthylpyrrolidone, le tetrahydrofurane, le diméthylsulfoxide, la cyclopentanone, la γ-butyrolactone et un mélange de ceux-ci.

4. Procédé selon l'une quelconque des revendications 1 à 3, **caractérisé en ce que** la proportion massique en polymère fluoré dans la solution est comprise entre 11 % et 20%.

5. Procédé selon la revendication 4, **caractérisé en ce que** la proportion massique en polymère fluoré dans la solution est comprise entre 13% et 17%.

6. Procédé selon l'une quelconque des revendications 1 à 5, **caractérisé en ce que** l'étape de précipitation du polymère fluoré est obtenue en plaçant le support sur lequel est déposée la solution dans une enceinte contenant l'atmosphère chargée en vapeur d'eau.

7. Procédé selon la revendication 6, **caractérisé en ce que** l'enceinte est thermostatée à une température comprise entre 30°C et 70°C, pendant la précipitation du polymère fluoré.

8. Procédé selon l'une quelconque des revendications 1 à 7, **caractérisé en ce que** le taux d'humidité relative pendant la précipitation du polymère fluoré est compris entre 60% et 98%

9. Procédé selon la revendication 8, **caractérisé en ce que** le taux d'humidité relative pendant la précipitation du polymère fluoré est compris entre 85% et 98%.

10. Procédé selon l'une quelconque des revendications 1 à 9, **caractérisé en ce que** l'étape de précipitation du polymère fluoré est suivie d'une étape de séchage sous vide à une température comprise entre 40°C et 80°C et avantageusement à une température de 60°C ± 5°C.

11. Procédé selon l'une quelconque des revendications 1 à 10, **caractérisé en ce que** la durée de l'étape de précipitation du polymère fluoré est comprise entre 1 minute et 60 minutes et avantageusement entre 10 minutes et 60 minutes.

12. Procédé selon l'une quelconque des revendications 1 à 11, **caractérisé en ce que** le support est formé par une électrode pour accumulateur au lithium.

13. Procédé selon l'une quelconque des revendications 1 à 12, **caractérisé en ce que** la solution est déposée sur ledit support à travers un applicateur de film à hauteur de fente réglable.

14. Procédé selon l'une quelconque des revendications 1 à 13, **caractérisé en ce que** le dépôt a une épaisseur comprise entre 10µm et 100µm et avantageusement entre 20µm et 50µm.

15. Procédé selon l'une quelconque des revendications 1 à 14, **caractérisé en ce que** le film présente un taux de porosité compris entre 35% et 95%.

16. Procédé selon l'une quelconque des revendications 1 à 15, **caractérisé en ce que** le film présente des pores ayant une taille moyenne comprise entre 0,5µm et 10µm.

17. Procédé selon la revendication 16, **caractérisé en ce que** le film présente des pores ayant une taille moyenne comprise entre 0,5µm et 4µm.

## Patentansprüche

1. Verfahren zur Herstellung einer Fluorpolymerschicht vom Polyvinylidenfluorid- Typ, mit den folgenden Schritten:
- Abscheiden einer Lösung mit einem Lösungsmittel, in dem das Fluorpolymer gelöst ist, auf einem Träger, und
- Niederschlag des Fluorpolymers durch Phasenumkehrung mit Wasser, **dadurch gekennzeichnet, dass** der Niederschlag des Polymers durch Zusammenbringen der Lösung mit einer mit Wasserdampf beladenen Atmosphäre erzielt wird und dass das Verfahren keinen Eintauchschritt in eine nicht lösende Flüssigkeit umfasst.

2. Verfahren gemäß Anspruch 1, **dadurch gekennzeichnet, dass** der Schritt des Niederschlags des Fluorpolymers bei einer Temperatur zwischen 30°C und 70°C durchgeführt wird.

3. Verfahren gemäß einem der Ansprüche 1 und 2, **dadurch gekennzeichnet, dass** das Lösungsmittel aus Aceton, Butanon, N-Methylpyrrolidon, Tetrahydrofuran, Dimethylsulfoxid, Cyclopentanon, γ-Butyrolacton und einer Mischung aus diesen ausgewählt ist.

4. Verfahren gemäß einem der Ansprüche 1 bis 3, **dadurch gekennzeichnet, dass** der Massenanteil von Fluorpolymer in der Lösung zwischen 11% und 20% liegt.

5. Verfahren gemäß Anspruch 4, **dadurch gekennzeichnet, dass** der Massenanteil von Fluorpolymer in der Lösung zwischen 13% und 17% liegt.

6. Verfahren gemäß einem der Ansprüche 1 bis 5, **dadurch gekennzeichnet, dass** der Schritt des Niederschlags von Fluorpolymer dadurch erzielt wird, dass der Träger, auf den die Lösung aufgebracht ist, in einem Raum, der die mit Wasserdampf beladene Atmosphäre enthält, platziert wird.

7. Verfahren gemäß Anspruch 6, **dadurch gekennzeichnet, dass** der Raum während des Niederschlags des Fluorpolymers auf eine Temperatur zwischen 30°C und 70°C thermostabilisiert wird.

8. Verfahren gemäß einem der Ansprüche 1 bis 7, **dadurch gekennzeichnet, dass** der relative Feuchtigkeitsgehalt während des Niederschlags des Fluorpolymers zwischen 60% und 98% liegt.

9. Verfahren gemäß Anspruch 8, **dadurch gekennzeichnet, dass** der relative Feuchtigkeitsgehalt während des Niederschlags des Fluorpolymers zwischen 85% und 98% liegt.

10. Verfahren gemäß einem der Ansprüche 1 bis 9, **dadurch gekennzeichnet, dass** auf den Schritt des Niederschlags des Fluorpolymers ein Schritt des Vakuumtrocknens bei einer Temperatur zwischen 40°C und 80°C und vorteilhafterweise bei einer Temperatur von 60°C ± 5°C folgt.

11. Verfahren gemäß einem der Ansprüche 1 bis 10, **dadurch gekennzeichnet, dass** die Dauer des Schrittes des Fluorpolymerniederschlags zwischen einer Minute und 60 Minuten und vorteilhafterweise zwischen 10 Minuten und 60 Minuten liegt.

12. Verfahren gemäß einem der Ansprüche 1 bis 11, **dadurch gekennzeichnet, dass** der Träger aus einer Elektrode für eine Lithiumbatterie besteht.

13. Verfahren gemäß einem der Ansprüche 1 bis 12, **dadurch gekennzeichnet, dass** die Lösung auf den Träger durch einen Schicht-Applikator mit einstellbarer Schlitzhöhe aufgebracht wird.

14. Verfahren gemäß einem der Ansprüche 1 bis 13, **dadurch gekennzeichnet, dass** die Ablagerung eine Dicke zwischen 10µm und 100µm und vorteilhafterweise zwischen 20µm und 50µm aufweist.

15. Verfahren gemäß einem der Ansprüche 1 bis 14, **dadurch gekennzeichnet, dass** die Schicht einen Porositätsgrad zwischen 33% und 95% aufweist.

16. Verfahren gemäß einem der Ansprüche 1 bis 15, **dadurch gekennzeichnet, dass** die Schicht Poren von einer mittleren Größe zwischen 0,5 µm und 10µm aufweist.

17. Verfahren gemäß Anspruch 16, **dadurch gekennzeichnet, dass** die Schicht Poren von einer mittleren Größe zwischen 0,5µm und 4 µm aufweist.

## Claims

1. A method of forming a fluorinated polymer film of the polyvinylidene fluoride type, comprising the following steps:
- deposition on a support of a solution containing a solvent in which the fluorinated polymer is dissolved and
- precipitation of the fluorinated polymer by phase inversion with water, **characterized in that** precipitation of the polymer is obtained by placing said solution in the presence of an atmosphere laden with water vapor and **in that** the method does not comprise an immersion step in a liquid non-solvent.

2. The method according to claim 1, **characterized in that** the precipitation step of the fluorinated polymer is performed at a temperature comprised between 30°C and 70°C.

3. The method according to one of claims 1 and 2, **characterized in that** the solvent is chosen from among acetone, butanone, N-methylpyrrolidone, tetrahydrofuran, dimethylsulfoxide, cyclopentanone, γ-butyrolactone and a mixture of the latter.

4. The method according to any one of claims 1 to 3, **characterized in that** the mass proportion of fluorinated polymer in the solution is comprised between 11% and 20%.

5. The method according to claim 4, **characterized in that** the mass proportion of fluorinated polymer in the solution is comprised between 13% and 17%.

6. The method according to any one of claims 1 to 5, **characterized in that** the precipitation step of the fluorinated polymer is obtained by placing the support on which the solution is deposited in an enclosure containing the atmosphere laden with water vapor.

7. The method according to claim 6, **characterized in that** the enclosure is thermostatically regulated at a temperature comprised between 30°C and 70°C during precipitation of the fluorinated polymer.

8. The method according to any one of claims 1 to 7, **characterized in that** the relative humidity content during precipitation of the fluorinated polymer is comprised between 60% and 98%

9. The method according to claim 8, **characterized in that** the relative humidity content during precipitation of the fluorinated polymer is comprised between 85% and 98%.

10. The method according to any one of claims 1 to 9, **characterized in that** the precipitation step of the fluorinated polymer is followed by a step of vacuum drying at a temperature comprised between 40°C and 80°C and advantageously at a temperature of 60°C ± 5°C.

11. The method according to any one of claims 1 to 10, **characterized in that** the duration of the precipitation step of the fluorinated polymer is comprised between 1 minute and 60 minutes and advantageously between 10 minutes and 60 minutes.

12. The method according to any one of claims 1 to 11, **characterized in that** the support is formed by an electrode for a lithium storage battery.

13. The method according to any one of claims 1 to 12, **characterized in that** the solution is deposited on said support via a film applicator with adjustable slot height.

14. The method according to any one of claims 1 to 13, **characterized in that** the deposition has a thickness comprised between 10µm and 100µm and advantageously between 20µm and 50µm.

15. The method according to any one of claims 1 to 14, **characterized in that** the film presents a rate of porosity comprised between 35% and 85%.

16. The method according to any one of claims 1 to 15, **characterized in that** the film presents pores having a mean size comprised between 0.5µm and 10µm.

17. The method according to claim 16, **characterized in that** the film presents pores having a mean size comprised between 0.5µm and 4µm.
